# EUROPEAN PATENT APPLICATION

(11) **EP 4 527 862 A1**
(43) Date of publication of application: **26.03.2025**
(21) Application number: 23806955.3
(22) Date of filing: 17.05.2023
(51) Int. Cl.: C08F 220/56, C08F 220/04, C08F 220/06, C08F 220/58, C08F 220/54, C08F 226/10, C08F 220/18, C08F 220/28, C08F 220/34, C08F 226/02, C08F 2/10

(54) **FREE RADICAL SOLUTION POLYMERIZATION METHOD, POLYMER, AND USE**

(30) Priority: 19.05.2022 CN 202210544298; 19.05.2022 CN 202210544299; 19.05.2022 CN 202210544294
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: YI, Zhuo, Beijing 100013 (CN); LIU, Xi, Beijing 100013 (CN); HU, Xiaona, Beijing 100013 (CN); YANG, Jinbiao, Beijing 100013 (CN); LI, Yajing, Beijing 100013 (CN); ZHANG, Ruiqi, Beijing 100013 (CN); SHANG, Dansen, Beijing 100013 (CN); ZHAO, Ruotong, Beijing 100013 (CN)
(74) Representative: karo IP
(86) International application number: PCT/CN2023/094657
(87) International publication number: WO 2023/222004

(57) **Abstract**

The invention provides a free radical solution polymerization process, a polymer and a use. The polymerization process comprises: introducing micro-nano bubbles of gas B into an aqueous solution of vinyl monomer(s), and initiating the free radical solution polymerization of the vinyl monomer(s) by the free radicals generated after the cavitation of the micro-nano bubbles to prepare a polymer. The micro-nano bubbles can generate free radicals through cavitation without an external stimulus, and the present invention initiates the free radical solution polymerization of the vinyl monomer(s) by the cavitation of the micro-nano bubbles.

## Description

### Technical Field

The invention relates to the field of free radical solution polymerization, in particular to free radical solution polymerization processes, polymers and uses.

### Backgrounds

Free radical polymerization is an effective method for producing various types of vinyl polymers on a large scale, in which about 60% or more of vinyl polymers are produced by free radical polymerization. Free radical polymerization has the advantages of high polymerization or copolymerization activity for various vinyl monomers and of mild polymerization conditions, wherein a small amount of impurities can exist in the polymerization system, and even cheap and environment-friendly water can be used as the reaction medium. An important stage of free radical polymerization is chain initiation, wherein the first step in chain initiation - the formation of primary free radicals - is most critical. Free radicals are generally generated in the polymerization system by photo initiation, thermal initiation, initiation via irradiation with high-energy ray, addition of an initiator or the like.

In prior art, modes for initiating polymerization include photo initiation, thermal initiation, initiation via irradiation with high energy ray, redox initiation or the like, wherein one mode or a combination of several modes may be used. The initiators used include, for example, azo initiators, redox initiators, photoinitiators, and the like. However, the above-mentioned initiation modes all have the disadvantages of complicated operation or high energy consumption. Conventional initiators are limited by initiation efficiency and half-life and cannot initiate at any temperature. The conventional initiators also have the problems of limited sources, high cost, being toxic, poor stability and the like. The modes of photo initiation, thermal initiation, high-energy ray radiation initiation and the like have the problem of high energy consumption.

Furthermore, in the production process, the initiator is generally added in excess in order to ensure a low residual monomer content in the polymer (for example, less than 0.1% by weight). Trace of initiator thus remains in the polymer product, which results in a low aging viscosity retention and a poor long-term stability.

Moreover, most acrylamide-based polymers are solid-core dry powders obtained by free radical aqueous solution polymerization initiated by an initiator. The production processes thereof generally include the steps of polymerization, granulating (optional hydrolysis), drying, pulverizing, sieving and the like. The presence of water as solvent during the polymerization can facilitate the diffusion of polymerization heat, so that the polymerization reaction temperature can be easily controlled; however, a large amount of heat energy is required to evaporate most of the water during drying procedure, and the polymer properties are affected by the occurrence of cross-linking between polymer chains due to a too long drying procedure.

It is known porous polymers can be produced by means of addition of a foaming agent and the like. For example, Chinese patent CN1542027A discloses the production of polyacrylamide by using ammonium bicarbonate as foaming agent; Chinese patent CN105566539A discloses the production of polyacrylamide by using ammonium bicarbonate as foaming agent and using N,N-dimethyl dodecyl amine oxide or N,N-diethyl dodecyl amine oxide as foaming promoter. The bubbles introduced in these prior arts have large diameters (millimeter level), and the bubbles are not uniformly distributed in the polymerization system, having no evident mass and heat transfer function. These bubbles introduced have no significant effect on the polymer production process.

Therefore, a free radical solution polymerization process which is simple in operation, low in energy consumption, easy and convenient to control and widely applicable is required. Meanwhile, a polymer with a porous structure is required, wherein the polymer has low energy consumption in the post-treatment procedure, short dissolving time, low residual monomer content and high aging viscosity retention.

### Disclosures of Invention

The present invention provides free radical solution polymerization processes, polymers and uses to solve one or more of the technical problems of the prior art.

The micro-nano bubbles generally refer to gas bubbles having a diameter of 50 µm or less, wherein tiny bubbles having a diameter of 1 µm or more are called as micro-bubbles (micro-bubbles), and ultra-tiny bubbles having a diameter of less than 1 µm and more than 1nm are further called as nano-bubbles (nano-bubbles). Compared with traditional coarse bubbles (diameter greater than 50 mm), the micro-nano bubbles have small diameter and significant small-size effect, and the mass and heat transfer characteristics and the interface properties of the micro-nano bubbles are evidently different from those of the traditional coarse bubbles. The micro-nano bubbles have much smaller buoyancy force in water (due to small volume) than that of common bubbles, and thus the micro-nano bubbles can stay in water for several minutes or even more than several hours. In the solution, the micro-nano bubbles have small diameter and large curvature, the internal pressure of the bubbles is large due to the surface tension of water, and gas in the bubbles is gradually compressed, finally leading to collapse of the bubbles. This process is referred to as "cavitation". In the process of "cavitation", when the micro-nano bubbles shrink, the charge density of electric double layer increases rapidly, and when the bubbles crack, the energy accumulated by high-concentration positive and negative ions on the interface is released due to the drastic change of disappearance of gas-liquid interface, and at this moment, a large amount of hydroxyl free radicals can be generated through excitation.

The inventors of the present application have surprisingly found that, by selecting a suitable gas source to generate bubbles with a diameter of micro-nanometer scale and introducing the bubbles into vinyl monomer(s) free radical solution polymerization system, a large amount of hydroxyl free radicals can be generated after cavitation of the micro-nanometer bubbles in the system, which can be used to initiate vinyl monomer(s) free radical solution polymerization.

Therefore, the micro-nano bubbles can be introduced into a free radical solution polymerization system to initiate polymerization by utilizing the "cavitation" action of the micro-nano bubbles in the solution. Free radicals can be generated and vinyl monomer(s) free radical solution polymerization can be initiated without external stimulus and without addition of an initiator, which can simplify the free radical solution polymerization and can reduce energy consumption.

In the process of the present invention, after the micro-nano gas bubbles are introduced, free radicals can be generated and free radical solution polymerization of the vinyl monomer(s) can be initiated without external stimulus, which results in simple operation and low energy consumption. The initiation of the vinyl monomer(s) free radical solution polymerization by utilizing the micro-nano bubbles has the characteristics of easy and convenient to control and widely applicable. Furthermore, the process of the present invention does not require the incorporation of an initiator.

One aspect of the present invention is to provide a free radical solution polymerization process, which process includes: introducing micro-nano bubbles of gas B into an aqueous solution of vinyl monomer(s), and initiating the free radical solution polymerization of the vinyl monomer(s) by the free radicals generated after the cavitation of the micro-nano bubbles to prepare a polymer. In some embodiments, the free radical solution polymerization process further includes passing an inert gas A into the aqueous solution of the vinyl monomer(s) to remove oxygen before introducing the micro-nano bubbles of gas B.

Another aspect of the present invention provides a free radical solution polymerization process which includes:
passing inert gas A into an aqueous solution of vinyl monomer(s) to remove oxygen, then introducing micro-nano bubbles of gas B, and initiating free radical solution polymerization of the vinyl monomer(s) by the free radicals generated after the cavitation of the micro-nano bubbles to prepare a polymer.

According to some embodiments, the present invention provides a free radical solution polymerization process comprising the steps of:
(1) passing inert gas A into an aqueous solution of vinyl monomer(s) to remove oxygen, thereby obtaining an oxygen-removed aqueous solution of vinyl monomer(s);
(2) introducing micro-nano bubbles of gas B into an oxygen-removed water to obtain an oxygen-removed water containing the micro-nano bubbles; and
(3) mixing the oxygen-removed aqueous solution of vinyl monomer(s) obtained in the step (1) with the oxygen-removed water containing the micro-nano bubbles obtained in the step (2), and initiating free radical solution polymerization of the vinyl monomer(s) by free radicals generated after cavitation of the micro-nano bubbles to prepare a polymer.

Yet another aspect of the present invention relates to a polymer prepared by the free radical solution polymerization process of the present invention.

Yet another aspect of the present invention relates to an acrylamide-based polymer with a micro-nano porous structure, wherein the polymer has pores with a diameter of 0.05 µm to 2 µm, more preferably 0.1 µm to 1 µm, still more preferably 0.1 µm to 0.5 µm, and a pore volume of 0.080 to 1 cm³/g, preferably 0.090 to 0.80 cm³/g, still more preferably 0.090 to 0.50 cm³/g, and the content of initiator in the polymer is zero. In some embodiments, the acrylamide-based polymer with micro-nano porous structure has at least one, preferably all, of the following properties: water solubility with dissolution time less than 30 minutes; viscosity average molecular weight of 300 × 10⁴-3000 × 10⁴; content by weight of residual monomer(s) of less than 0.1%; and aging viscosity retention of greater than 90% (105 °C).

Still another aspect of the present invention relates to use of the above-described polymer in the recovery of an oil reservoir, preferably in high temperature high salt oil reservoir polymer flooding, offshore oil reservoir polymer flooding, heavy oil reservoir polymer flooding, and fracturing.

### Detailed Description

The present invention provides a free radical solution polymerization process in which free radical solution polymerization of a vinyl monomer(s) is initiated by free radicals generated after cavitation of micro-nano bubbles, preferably nano bubbles, to produce a polymer.

In the free radical solution polymerization process of the present invention, no free radical initiator is added, and no free radical is generated by other means such as light, heat, radiation and the like; that is, the free radicals used to initiate the free radical solution polymerization of vinyl monomer(s) in the free radical solution polymerization process of the present invention are generated only by cavitation of the micro-nano bubbles.

As will be appreciated by those skilled in the art, the content of initiator in the polymer obtained by the polymerization process of the present invention is zero, since no free radical initiator is added initiatively during the polymerization procedure.

One aspect of the present invention is to provide a free radical solution polymerization process, which includes introducing micro-nano bubbles of gas B into an aqueous solution of vinyl monomer(s), and initiating the free radical solution polymerization of the vinyl monomer(s) by the free radicals generated after the cavitation of the micro-nano bubbles to prepare a polymer. Preferably, in the free radical solution polymerization process, an inert gas A is passed into the aqueous solution of the vinyl monomer(s) to remove oxygen before introducing the micro-nano bubbles of gas B.

In some embodiments, the aqueous solution of vinyl monomer(s) can have a concentration by weight of vinyl monomer(s) of from 10% to 55% or from 10% to 50%; preferably 15% to 50%; more preferably 15% to 35%.

In the present invention, any water generally used in free radical solution polymerization can be used. For example, deionized water, distilled water, tap water, circulated water, recycled water, water of natural origin and the like can be used. Water of natural origin can include river water, lake water, sea water, rain water and the like.

In the present invention, the inert gas A is any inert gas which is capable of removing oxygen from the aqueous solution. The removal of oxygen from an aqueous monomer solution (oxygen removal, also referred to as deactivation) prior to free radical solution polymerization is known in the art. Any inert gas generally known in the art that can be used for oxygen removal can be used. In some embodiments, the inert gas A can be at least one of nitrogen, argon, helium, neon, krypton, xenon, or any combination thereof.

In the present invention, the gas B can be any gas capable of generating free radicals through cavitation of micro-nano bubbles. In some embodiments, the gas B can be at least one of nitrogen, argon, helium, neon, krypton, xenon, carbon dioxide, or any combination thereof.

The inert gas A and the gas B can be the same or different. The inert gas A and the gas B can be one gas or can be a mixture of several gases.

In the present invention, the vinyl monomer refers to a monomer having one or more carbon-carbon double bonds and being capable of undergoing free radical solution polymerization.

In some embodiments, the vinyl monomer can be selected from the group consisting of anionic monomers, salts of anionic monomers, nonionic monomers, cationic monomers, and any combination thereof; for example, the vinyl monomer can be at least one or more, such as 2, 3, 4, 5 or more, of anionic monomers and salts thereof such as alkali metal salts, alkaline earth metal salts and ammonium salts, nonionic monomers, and cationic monomers.

According to some embodiments, the vinyl monomer is preferably an electron-deficient olefin, more preferably an electron-deficient olefin comprising at least one group selected from the group consisting of amide group, carboxyl group, ester group, phenyl group, sulfonic acid group and combinations thereof.

In some embodiments, the anionic monomer can comprise or be selected from: acrylic acid, methacrylic acid, maleic acid, fumaric acid, itaconic acid, maleic anhydride, cinnamic acid, (E)-butenedioic acid, crotonic acid, 2-methacrylamidoethylsulfonic acid, 2-acrylamidoethanesulfonic acid, 2-acrylamido-2-methylpropanesulfonic acid, 2-methacrylamido-2-methylpropanesulfonic acid, 2-acrylamidopropanesulfonic acid, 2-methacrylamido-propanesulfonic acid, vinylsulfonic acid, propenylsulfonic acid, styrenesulfonic acid, and any combination thereof.

The salt of the anionic monomer can be selected from the group consisting of alkali metal salts, alkaline earth metal salts and ammonium salts. In some embodiments, the alkali metal salt can be selected from lithium, potassium and sodium salts, and the alkaline earth metal salt can be selected from magnesium, calcium, strontium and barium salts.

In some embodiments, the nonionic monomer can comprise at least one of or can be selected from the group consisting of: acrylamide, methacrylamide, N-vinylpyrrolidone, N-ethylacrylamide, N-ethylmethacrylamide, N-methylacrylamide, N-methylmethacrylamide, N,N-dimethylacrylamide, N,N-diethylacrylamide and N,N-diisopropylacrylamide, N,N-dimethylmethacrylamide, N,N-diethylmethacrylamide and N,N-diisopropylmethacrylamide, 2-hydroxyethyl methacrylate, 2-hydroxyethyl acrylate, 2-hydroxypropyl methacrylate, 2-hydroxypropyl acrylate, methoxypolyethylene glycol methacrylate, methoxypolyethylene glycol acrylate, polyethylene glycol acrylate, polyethylene glycol methacrylate, N-vinylacetamide, methyl acrylate, methyl methacrylate, ethyl acrylate, ethyl methacrylate, propyl acrylate, propyl methacrylate, butyl acrylate, butyl methacrylate, vinyl acetate, vinyl propionate, N-[(4-aminosulfonyl)phenyl]acrylamide, and any combination thereof.

In some embodiments, the nonionic monomer comprises a hydrophilic group. In some embodiments, the hydrophilic group-containing nonionic monomer can comprise or be selected from: acrylamide, methacrylamide, N-vinylpyrrolidone, N-ethylacrylamide, N-ethylmethacrylamide, N-methylacrylamide, N-methylmethacrylamide, N,N-dimethylacrylamide, N,N-diethylacrylamide and N,N-diisopropylacrylamide, N,N-dimethylmethacrylamide, N,N-diethylmethacrylamide and N,N-diisopropylmethacrylamide, 2-hydroxyethyl methacrylate, 2-hydroxyethyl acrylate, 2-hydroxypropyl methacrylate, 2-hydroxypropyl acrylate, methoxypolyethylene glycol methacrylate, methoxypolyethylene glycol acrylate, polyethylene glycol acrylate, polyethylene glycol methacrylate, N-vinylacetamide, N-[(4-aminosulfonyl)phenyl]acrylamide, and any combination thereof.

In some embodiments, the cationic monomer can include or be selected from: dimethylaminoethyl acrylate and quaternary ammonium salts thereof, dimethylaminoethyl methacrylate and quaternary ammonium salts thereof, dimethylaminopropyl acrylate and quaternary ammonium salts thereof, dimethylaminopropyl methacrylate and quaternary ammonium salts thereof, dimethylaminopropyl acrylamide and quaternary ammonium salts thereof, dimethylaminopropyl methacrylamide and quaternary ammonium salts thereof, and any combination thereof.

In an embodiment, the vinyl monomer(s) can further comprise a hydrophobic monomer. The hydrophobic monomer can be used in an amount that does not affect the water solubility of the polymer. For example, the total weight of the hydrophobic monomer(s) is not more than 10% of the total weight of the vinyl monomer(s). The hydrophobic monomer can include or be selected from the group consisting of: N-hexyl acrylamide, N-octyl acrylamide, N-nonyl acrylamide, N-dodecyl acrylamide, N-tetradecyl acrylamide, N-hexadecyl acrylamide, N-octadecyl acrylamide, N,N-dibutyl acrylamide, N,N-dihexyl acrylamide, N,N-dioctyl acrylamide, N,N-didecyl acrylamide, N,N-di(dodecyl) acrylamide, methyl acrylate, methyl methacrylate, ethyl acrylate, ethyl methacrylate, butyl acrylate, butyl methacrylate, propyl acrylate, propyl methacrylate, vinyl acetate, vinyl propionate, and combinations thereof.

In some embodiments of the present invention, the vinyl monomer(s) can be selected from the group consisting of: acrylamide, methacrylamide, N,N-dimethylacrylamide, dimethylaminoethyl methacrylate, sodium acrylate, sodium crotonate, sodium 2-acrylamido-2-methylpropanesulfonate, methyl acrylate, N-vinylpyrrolidone, maleic anhydride, and N-[(4-aminosulfonyl)phenyl]acrylamide.

In some embodiments of the present invention, the vinyl monomer(s) in the aqueous solution of vinyl monomer(s) comprises acrylamide, preferably comprises a major amount of acrylamide, and optionally one or more of the vinyl monomers described above other than acrylamide. In some embodiments of the present invention, the vinyl monomer(s) comprises a major amount of acrylamide and one or more further vinyl monomers selected from the group consisting of: methacrylamide, N,N-dimethylacrylamide, dimethylaminoethyl methacrylate, sodium acrylate, sodium crotonate, sodium 2-acrylamido-2-methylpropanesulfonate, methyl acrylate, N-vinylpyrrolidone, maleic anhydride, and N-[(4-aminosulfonyl)phenyl]acrylamide. In the present invention, a major amount refers to at least 50 wt%, such as at least 60 wt%, based on the total amount of vinyl monomers.

In the present invention, the gas B is introduced in the form of micro-nano bubbles into the aqueous solution of vinyl monomer(s). The average diameter of the micro-nano bubbles of the gas B can be from 20 nm to 1 µm; preferably 20 nm to 900 nm; more preferably 30 nm to 500 nm; more preferably 40 nm to 400 nm; still more preferably 50 nm to 200 nm.

In the present invention, the size of the micro-nano bubbles is measured by dynamic light scattering method, and the Z-average value is used as the diameter of the bubbles.

Preferably, in the present invention, the micro-nano bubbles of the gas B are nano bubbles.

In some preferred embodiments of the present invention, the micro-nano bubbles of the gas B have an average diameter of from 50 nm to 500 nm; more preferably from 50 nm to 200 nm.

When the average diameter of the micro-nano bubbles is in nanoscale, the micro-nano bubbles begin to cavitate after being introduced into the aqueous solution of vinyl monomer(s). Cavitation of the micro-nano bubbles can excite and generate a large amount of hydroxyl free radicals, so that free radical solution polymerization of the vinyl monomer(s) is initiated.

The present invention has no particular limitations on the generation modes of the micro-nano bubbles. The micro-nano bubbles can be generated by using any method capable of generating micro-nano bubbles. For example, the micro-nano bubbles can be generated by using methods of hydrodynamic cavitation, ultrasonic cavitation, pressure fluctuation, electrolysis of water or the like.

In some embodiments, the micro-nano bubbles can be generated by using the model LF 1500 micro-nano bubble generation device manufactured by Shandong Micro-bubble Environmental Protection Equipment Co., LTD. The diameter of the bubbles can be controlled by the rotameter, the pressure and the generator. The average diameter of the micro-nano bubbles can be controlled to be 50 nm-20 µm when the gas input of the micro-nano bubble generator is controlled to be 10-200 mL/min and the inlet pressure is controlled to be 0.2-1 MPa.

In some embodiments, the volume of the micro-nano bubbles-containing solution or water obtained after introducing the micro-nano bubbles increases. For example, the volume of the solution or water can be increased by 0.5%-4%, such as 0.6%-3%, after introducing the micro-nano bubbles.

In some embodiments, the concentration of hydroxyl free radicals in the polymerization system can range from 0.05 to 0.5µmol/L.

In the present invention, the hydroxyl free radical concentration is determined by methylene blue-spectrophotometry.

In some preferred embodiments of the present invention, the pH of the aqueous solution of the vinyl monomer(s) can be from 4 to 9; preferably 4 to 6. For example, the pH can be adjusted by means of addition of an acid or a base.

In the free radical solution polymerization process of the present invention, in some embodiments, the introducing of the micro-nano bubbles of the gas B comprises introducing the micro-nano bubbles of the gas B directly into the oxygen-removed aqueous solution of the vinyl monomer(s).

In the free radical solution polymerization process of the present invention, in some embodiments, the introducing of the micro-nano bubbles of the gas B comprises: introducing the micro-nano bubbles of the gas B into oxygen-removed water to obtain oxygen-removed water containing the micro-nano bubbles, and mixing the oxygen-removed water containing the micro-nano bubbles with the oxygen-removed aqueous solution of vinyl monomer(s). After mixing, the aqueous solution of vinyl monomer(s) containing micro-nano bubbles are obtained, and the free radical solution polymerization of the vinyl monomer(s) is initiated by free radicals generated after the cavitation of the micro-nano bubbles so as to prepare the polymer. As will be understood by those skilled in the art, the aqueous solution of vinyl monomer(s) containing micro-nano bubbles obtained after mixing the oxygen-removed water containing the micro-nano bubbles with the oxygen-removed aqueous solution of vinyl monomer(s) can have the concentration by weight of the vinyl monomer(s) described above.

In the free radical solution polymerization process of present application, the initial polymerization reaction temperature can be -10 °C to 40 °C; preferably, it can be 0 to 25 °C.

According to some embodiments, in the free radical solution polymerization process of the present invention, the polymerization reaction is an exothermic reaction.

The free radical solution polymerization process of the present invention can be carried out in any suitable reactor. In some embodiments, the free radical solution polymerization of the present invention is conducted in an adiabatic reactor.

In some embodiments of the present invention, the diameter of the bubbles of the inert gas A can be from 1mm to 10 mm. In some embodiments of the present invention, the time for passing the bubbles of the inert gas A can be 5min to 60 min; preferably, the passing time can be 20 min-40 min.

As known to those skilled in the art, the purpose of passing into the inert gas A is to remove oxygen. In some embodiments, the inert gas A with a bubble diameter of 1mm to 10mm can be provided by combining a common nitrogen gas cylinder and a pressure reducing valve with a flow meter and by controlling the flow rate of the pressure reducing valve to be 2 to 20L/min, preferably 5 to 15L/min.

In the present invention, the polymer is obtained after the free radical solution polymerization of the vinyl monomer(s) is completed. Since the micro-nano bubbles can stay in water for a long time, in the free radical solution polymerization process of present invention, micro-nano bubbles exist in the polymerization system while polymerization. Due to the presence of micro-nano bubbles, the polymer in the form of bubble-containing jelly is obtained after the polymerization is completed.

The treatment of polymer in the form of jelly is known in the art. For example, the treating method of the jelly-like solid can include granulating the jelly-like solid, hydrolyzing or not hydrolyzing, oven drying, pulverizing, and sieving. The polymer in the form of bubble-containing jelly of the present invention can be treated by the same treating method.

In some embodiments, jelly-like solids of different types of polymers are produced, and, after granulation as required, they can be hydrolyzed and then oven dried, or they can be oven dried directly without hydrolysis. After the polymer to be hydrolyzed is granulated, a base is added to react at a certain temperature for a period of time to prepare the polymer with a certain hydrolysis degree. The non-hydrolysis polymer does not need to be hydrolyzed and is directly oven dried after granulation.

After the polymer in the form of bubble-containing jelly is treated, the polymer with a micro-nano porous structure is obtained. According to some embodiments, the polymer with the micro-nano porous structure can be a granular or powdered polymer.

According to some embodiments, the polymer with a micro-nano porous structure has pores with a diameter of 0.05 µm to 2 µm, more preferably 0.1 µm to 1 µm, still more preferably 0.1 µm to 0.5 µm, and a pore volume of 0.080 to 1 cm³/g, preferably 0.090 to 0.80 cm³/g, still more preferably 0.090 to 0.50 cm³/g. For example, the pore volume can be 0.080 cm³/g, 0.090 cm³/g, 0.10 cm³/g, 0.11 cm³/g, 0.12 cm³/g, 0.13 cm³/g, 0.14 cm³/g, 0.15 cm³/g, 0.20 cm³/g, 0.25 cm³/g, 0.30 cm³/g, 0.35 cm³/g, 0.40 cm³/g, 0.45 cm³/g, 0.50 cm³/g, 0.55 cm³/g, 0.60 cm³/g, 0.65 cm³/g, 0.70 cm³/g, 0.75 cm³/g, 0.80 cm³/g, 0.90 cm³/g, or 1 cm³/g.

In the present invention, 200 pores are randomly selected for diameter measurement and the average value is used as the diameter of the pores. The pore volume is determined according to GB/T 21650.1-2008 "Pore Size Distribution and Porosity of Solid Materials by Mercury Porosimetry and Gas Adsorption - Part 1: Mercury Porosimetry".

In some embodiments of the present invention, the introducing of the micro-nano bubbles is stopped after the temperature of the polymerization system is increased by 0.5-1 °C, and the reaction is continued for additional 1-6 hours; preferably 2-5 hours.

The polymer obtained by the free radical solution polymerization process of the present invention has desirable molecular weights. The polymer obtained by the free radical solution polymerization process of the present invention can have a viscosity average molecular weight of 300 × 10⁴-3000 × 10⁴.

The polymer obtained by the free radical solution polymerization process of the present invention is water soluble and has an advantageous dissolution speed. Due to the presence of the porous structure in the polymer, the polymer obtained by the free radical solution polymerization process of the present invention can have a water solubility with a dissolution time of less than 30 minutes.

The polymer obtained by the free radical solution polymerization process of the present invention has a low residual monomer(s) content. The polymer obtained by the free radical solution polymerization process of the present invention can have a residual monomer(s) content by weight of less than 0.1%.

The free radical solution polymerization process of the present invention does not use an initiator, and thus there is no problem of residue of initiator. Thus, the polymer obtained by the free radical solution polymerization process of the present invention has a high aging viscosity retention and therefore a good long term stability. The polymer obtained by the free radical solution polymerization process of the present invention can have an aging viscosity retention of greater than 90% (105 °C).

In some embodiments, the polymer obtained by the free radical solution polymerization process of the present invention can have at least one, preferably all, of the following properties: water solubility with a dissolution time of less than 30 minutes; viscosity average molecular weight of 300 × 10⁴-3000 × 10⁴; content by weight of residual monomer(s) of less than 0.1%; and aging viscosity retention of greater than 90% (105 °C).

Another aspect of the present invention is to provide polymers prepared by the free radical solution polymerization process of the present invention. As will be appreciated by those skilled in the art, the polymers produced by the free radical solution polymerization process of the present invention have the properties described hereinabove. For example, the initiator content in the polymer is zero.

According to some embodiments, the polymer produced by the free radical solution polymerization process of the present invention is a granular or powdered polymer with a micro-nano porous structure. According to some embodiments, the polymer produced by the free radical solution polymerization process of the present invention is granules or powders with a micro-nano porous structure. According to some embodiments, the polymer with a micro-nano porous structure has pores with a diameter of 0.05 µm to 2 µm, more preferably 0.1 µm to 1 µm, still more preferably 0.1 µm to 0.5 µm, and a pore volume of 0.080 to 1 cm³/g, preferably 0.090 to 0.80 cm³/g, still more preferably 0.090 to 0.50 cm³/g. For example, the pore volume can be 0.080 cm³/g, 0.090 cm³/g, 0.10 cm³/g, 0.11 cm³/g, 0.12 cm³/g, 0.13 cm³/g, 0.14 cm³/g, 0.15 cm³/g, 0.20 cm³/g, 0.25 cm³/g, 0.30 cm³/g, 0.35 cm³/g, 0.40 cm³/g, 0.45 cm³/g, 0.50 cm³/g, 0.55 cm³/g, 0.60 cm³/g, 0.65 cm³/g, 0.70 cm³/g, 0.75 cm³/g, 0.80 cm³/g, 0.90 cm³/g, or 1 cm³/g.

A still another aspect of the present invention is to provide an acrylamide-based polymer with a micro-nano porous structure, wherein the polymer has pores with a diameter of 0.05 µm to 2 µm, more preferably 0.1 µm to 1 µm, still more preferably 0.1 µm to 0.5 µm, and a pore volume of 0.080 to 1 cm³/g, preferably 0.090 to 0.80 cm³/g, still more preferably 0.090 to 0.50 cm³/g, and the content of initiator in the polymer is zero. For example, the pore volume can be 0.080 cm³/g, 0.090 cm³/g, 0.10 cm³/g, 0.11 cm³/g, 0.12 cm³/g, 0.13 cm³/g, 0.14 cm³/g, 0.15 cm³/g, 0.20 cm³/g, 0.25 cm³/g, 0.30 cm³/g, 0.35 cm³/g, 0.40 cm³/g, 0.45 cm³/g, 0.50 cm³/g, 0.55 cm³/g, 0.60 cm³/g, 0.65 cm³/g, 0.70 cm³/g, 0.75 cm³/g, 0.80 cm³/g, 0.90 cm³/g, or 1 cm³/g.

In some embodiments, the acrylamide-based polymer with a micro-nano porous structure has at least one, preferably all, of the following properties: water solubility with a dissolution time of less than 30 minutes; viscosity average molecular weight of 300 × 10⁴-3000 × 10⁴; content by weight of residual monomer(s) of less than 0.1%; and aging viscosity retention of greater than 90% (105 °C).

The acrylamide-based polymer comprises acrylamide, preferably a major amount of acrylamide, and optionally one or more of the vinyl monomers described above other than acrylamide.

A still further aspect of the present invention is to provide the use of the polymer of the invention in the industries of oil recovery, water treatment, textile printing and dyeing, paper making, mineral dressing and the like.

Some embodiments of the present invention is to provide use of the polymer of present invention in the recovery of oil reservoir, preferably in high temperature high salt oil reservoir polymer flooding, offshore oil reservoir polymer flooding, heavy oil reservoir polymer flooding, and fracturing; the polymer of present invention can be used as thickening agent for high temperature high salt oil reservoir polymer flooding, offshore oil reservoir polymer flooding and heavy oil reservoir polymer flooding, or as thickening agent and resistance-reducing agent for fracturing. The polymer of the present invention has micro-nano porous structures uniformly distributed in the interior and on the surface, such that during the dissolving procedure of the granular or powdered polymer, polymer granules or powders contact with water and are quickly permeated and swelled, thereby reducing greatly the dissolving time of the polymer.

As is known in the art of polymer flooding, polymers for offshore oil reservoir polymer flooding are formulated with wastewater and have a short on-line maturation time. Therefore, the development of a quick-dissolving flooding polymer suitable for offshore polymer flooding is required. The polymer of present invention has an excellent dissolution speed, and thus meets the quick dissolution requirement for a polymer for offshore oil reservoir polymer flooding.

The polymer of the present invention has a high aging viscosity retention and therefore has a good long-term stability, which makes the polymer particularly suitable as a polymer for high temperature high salt oil reservoir polymer flooding or offshore oil reservoir polymer flooding.

In some embodiments, the present invention includes an initiation method for free radical solution polymerization of a vinyl monomer(s), comprising the steps of:
formulating one or more vinyl monomers into an aqueous solution with concentration by weight of 10-55%, preferably 15-50%;
controlling the initial polymerization temperature of the system to be - 10 °C to 40 °C, preferably 0 °C to 25 °C;
bubbling common bubbles of inert gas A with a diameter of 1 mm-10 mm into the system for 5 min-60 min, preferably for 20 min-40 min to remove oxygen, and then
introducing micro-nano bubbles of the gas B with a diameter of 50 nm-500 nm, preferable 50 nm-200 nm into the system;
stopping the introducing of the micro-nano bubbles after the temperature of the system increases by 0.5-1 °C and the system becomes viscous and the reaction is continued for additional 1-6 hours, preferably for 2-5 hours;
subjecting the resulting jelly to granulating, hydrolyzing or not hydrolyzing, oven drying, pulverizing, sieving and the like procedures to obtain a polymer with molecular weight of 300 × 10⁴-3000 × 10⁴;
the inert gas A is at least one selected from the group consisting of nitrogen, argon, helium, neon, krypton, xenon and combinations thereof;
the gas B is at least one selected from the group consisting of nitrogen, argon, helium, neon, krypton, xenon, carbon dioxide and combinations thereof;
the vinyl monomer is at least one selected from the group consisting of anionic monomers and alkali metal salts and ammonium salts thereof, nonionic monomers and cationic monomers, preferably is an electron-deficient olefin, and is more preferably an electron-deficient olefin comprising at least one group selected from the group consisting of amide group, carboxyl group, ester group, phenyl group, sulfonic acid group, and combinations thereof; wherein a small amount of hydrophobic monomer(s) can further be included provided that the water solubility of the polymer is not affected;
the anionic monomer is at least one selected from the group consisting of acrylic acid, methacrylic acid, maleic anhydride, cinnamic acid, fumaric acid, crotonic acid, 2-methacrylamidoethylsulfonic acid, 2-acrylamidoethanesulfonic acid, 2-acrylamido-2-methylpropanesulfonic acid, vinylsulfonic acid, propenylsulfonic acid, styrenesulfonic acid, and combinations thereof;
the alkali metal salt is at least one selected from the group consisting of lithium, potassium or sodium metal salt;
the nonionic monomer comprises a hydrophilic group; preferably is at least one selected from the group consisting of acrylamide, methacrylamide, N-vinylpyrrolidone, N-ethylacrylamide, N,N-dimethylacrylamide, 2-hydroxyethyl methacrylate, 2-hydroxyethyl acrylate, 2-hydroxypropyl methacrylate, 2-hydroxypropyl acrylate, methoxypolyethylene glycol methacrylate, methoxypolyethylene glycol acrylate, polyethylene glycol acrylate, polyethylene glycol methacrylate, N-vinylacetamide and combinations thereof;
the cationic monomer is at least one selected from the group consisting of dimethylaminoethyl acrylate and quaternary ammonium salts thereof, dimethylaminoethyl methacrylate and quaternary ammonium salts thereof, dimethylaminopropyl acrylamide and quaternary ammonium salts thereof, dimethylaminopropyl methacrylamide and quaternary ammonium salts thereof and combination thereof;
the hydrophobic monomer is at least one selected from the group consisting of methyl acrylate, methyl methacrylate, ethyl acrylate, ethyl methacrylate, butyl acrylate, butyl methacrylate, vinyl acetate, vinyl propionate, and combinations thereof.

In present invention the free radical solution polymerization of vinyl monomer(s) is initiated through the micro-nano bubbles, and the micro-nano bubbles can generate free radicals without external stimulus, wherein when the micro-nano bubbles shrink, the charge density of electric double layer increases rapidly, and when the bubbles crack, the energy accumulated by high-concentration positive and negative ions on the interface is released due to the drastic change of disappearance of gas-liquid interface, and at this moment, a large amount of hydroxyl free radicals can be generated through excitation, initiating the free radical solution polymerization of vinyl monomer(s).

The initiation method of using the micro-nano bubbles as the initiator for free radical solution polymerization of vinyl monomer(s) of present invention is simple in operation and low in energy consumption, and has the characteristics of easy and convenient to control and widely applicable.

The present invention has the following advantages and effects with respect to initiation range and polymer properties: be capable of initiating at any temperature, not limited by initiation efficiency and half-life period of a traditional initiator; avoiding the problems of influence of the source, cost, toxicity, stability and residue of a traditional initiator on the properties of the polymer and the like; avoiding the problems of energy consumption of conventional initiation modes of light, heat, high-energy ray radiation and the like. The present inventors have surprisingly found that the polymerization process of the present invention can ensure a low residual monomer content while making the resulting polymer having a good hydrothermal aging stability.

Meanwhile, in present invention, a porous structure (0.1 µm-0.5 µm) will be formed in the polymer dry powders after the jelly-like solid is dried due to the introducing of micro-nano bubbles, so polymers with the micro-nano porous structure is obtained, and thus the invention further has the following advantages:(1) the micro-nano bubbles introduced have a small diameter and are uniformly distributed in the polymerization solution, and the small-size effect of the micro-nano bubbles can strengthen high-efficiency heat transfer and reduce jelly property fluctuation caused by local polymerization overheating; (2) in the drying procedure, the micro-nano bubbles on the surface of the jelly can increase greatly the specific surface area, strengthen high-efficiency heat transfer, shorten the drying time and reduce the energy consumption; (3) similarly, the cooling time of jelly granules is also shortened, and the efficiency in the subsequent pulverizing and sieving procedures is also improved; and (4) the porous structure can render quick permeating and swelling when contacting water, so that the dissolution time of the polymer is greatly reduced.

### Examples

The present invention is described in detail below in conjunction with specific examples, and it is necessary to indicate here that the following examples are only used to further illustrate the present invention and cannot be construed as limitations to the protection scopes the present invention. Some non-essential improvements and adjustments made by those skilled in the art according to the contents of present invention to the present invention still fall into the protection scope of the present invention.

The starting materials and reagents used in the examples and comparative examples are all common and commercial starting materials:
acrylamide was purchased from Dongying Baomo Environmental Engineering Co., Ltd.;
sodium 2-acrylamido-2-methylpropanesulfonate was purchased from Weifang Jinshi Environmental Protection Technology Co., Ltd.;
2,2'-azobis(2-methylpropionamidine)dihydrochloride was purchased from Sigma-Aldrich;
N,N-dimethylacrylamide was purchased from Beijing RBL Chemicals Co., Ltd;
Other starting materials and reagents are all commercially available.

The following tests are used in present invention:
(1) solid content, viscosity-average molecular weight and residual monomer content of polymer are determined according to the method specified in Oil and Gas Industry Standard SY/T 5862-2020 of the People's Republic of China.
(2) testing of dissolution speed: the test is carried out in a simulated saline with a mineralization degree of 10000mg/L and a temperature of 40 °C; the specific method comprises the following steps:
   ① adding 300g of the simulated saline into a beaker, and adding in 2 or 3 drops of 1% of indigotindisulfonate sodium;
   ② weighing out 0.3g of polymer dry powder;
   ③ adding in the weighed polymer dry powder slowly at stirring speed of 500 revolutions per minute;
   ④ observing the dissolution state at a certain time interval; if the solution is uniform in color distribution, the polymer is completely dissolved; or if there is any bright point, the observation should continue until the dissolution is uniform, and the experiment is finished.
(3) testing of aging viscosity retention: in simulated saline at 105 °C and having a mineralization degree of 10000mg/L, calcium and magnesium ions content of 500mg/L and oxygen content of less than 0.5mg/L, the viscosity of 1500mg/L polymer solution, after being left standing for a certain number of days, is measured (by using a Brookfield viscometer, 7.34s⁻¹ condition, 0# rotor), and the aging viscosity retention is obtained as the ratio of the viscosity after aging to the initial viscosity.
(4) testing of filtration factor: according to the method specified in SY/T 5862-2020, the testing is carried out by using apparatus Gelman 2220 filter membrane holder, a 600mL Millipore filter cartridge or a similar product, and using a simulated saline with a mineralization degree of 10000mg/L and a calcium and magnesium ion content of 500 mg/L.
(5) micro-nano bubbles are generated by using the model LF 1500 micro-nano bubble generation device manufactured by Shandong Micro-bubble Environmental Protection Equipment Co., LTD.. The size of the generated micro-nano bubbles is measured by dynamic light scattering method by using Zetasizer Nano ZS laser particle size analyzer from Malvern Panalytical at 25 °C and at 173 degree, wherein the Z-average value obtained is used as the diameter of the bubbles; the measurement is repeated for 3 times, and the average value of the 3 measurements is used as the average diameter of the micro-nano bubbles.
(6) hydroxyl free radical concentration is determined by methylene blue-spectrophotometry. Firstly, methylene blue standard solutions are formulated, and the standard working curve between methylene blue concentrations and the absorbances are measured, setting the measuring wavelength at 660 nm. Then a methylene blue solution is added into the water containing micro-nano bubbles, wherein hydroxyl free radicals in the water containing micro-nano bubbles will react with methylene blue so as to change the color of the solution. The change of absorbance is measured, and the concentration of the hydroxyl free radicals in the solution is calculated according to the methylene blue solution standard curve.
(7) after the surface of porous polymer powder is subjected to gold plating treatment, the surface morphology of the porous polymer powder is observed by using S-4800 from Hitachi Scanning Electron Microscope Company, Japan. 200 pores are randomly selected for diameter measurement by using Photoshop software, and the average value is used as the average diameter of the pores. Pore volume is determined using model AutoPore IV 9500 full-automatic mercury porosimeter according to testing method "Pore Size Distribution and Porosity of Solid Materials by Mercury Porosimetry and Gas Adsorption - Part 1: Mercury Porosimetry" (GB/T 21650.1-2008).

### Example 1

40g of acrylamide, 5g of sodium acrylate and 5g of sodium 2-acrylamido-2-methylpropanesulfonate were dissolved in 250g of deionized water, and the pH was adjusted to 4.0; the initial temperature was controlled to be 5 °C, and nitrogen with the diameter of 1 mm-10 mm was passed into the system for 20min to remove oxygen; then nitrogen nanobubbles with average diameter of 50 nm was introduced into the system (inlet pressure being controlled to be 0.8MPa, and the gas input rate being controlled to be 10mL/min); the volume of the system was increased by 1.0%, and the measured concentration of hydroxyl free radicals was 0.23 µmol/L; after the temperature of the system was increased by 0.5 °C, the introducing of the nanobubbles was stopped, but the reaction was continued for additional 5 hours; after the polymerization was completed, the resulting jelly solid was granulated, dried at 50 °C until the solid content reached 89%; pulverizing and sieving were conducted to obtain a 20 to 80-mesh polymer.

The viscosity average molecular weight of the polymer was determined to be 2320 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 2

50g of acrylamide, 5g of methacrylamide and 3g of sodium crotonate were dissolved in 242g of deionized water, and the pH was adjusted to 6; the initial temperature was controlled to be 10 °C, and nitrogen with the diameter of 1 mm-10 mm was passed into the system for 20min to remove oxygen; then argon nanobubbles with average diameter of 80 nm were introduced into the system (inlet pressure being controlled to be 0.7MPa, and the gas input rate being controlled to be 20mL/min); the volume of the system was increased by 1.2%, and the measured concentration of hydroxyl free radicals was 0.25 µmol/L; after the temperature of the system was increased by 1 °C, the introducing of the nanobubbles was stopped, but the reaction was continued for additional 2 hours; after the polymerization was completed, the resulting jelly solid was granulated, and dried at 50 °C until the solid content reached 89%; pulverizing and sieving were conducted to obtain a 20 to 80-mesh polymer.

The viscosity average molecular weight of the polymer was determined to be 1550 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 3

60g of acrylamide, 13g of N,N-dimethylacrylamide, 15g of sodium 2-acrylamido-2-methylpropanesulfonate and 2g of methyl acrylate were dissolved in 210g of deionized water, and the pH was adjusted to 5.0; the initial temperature was controlled to be 20 °C, and nitrogen with the diameter of 1 mm-10 mm was passed into the system for 40min to remove oxygen; then helium nanobubbles with average diameter of 150 nm were introduced into the system (inlet pressure being controlled to be 0.5MPa, and the gas input rate being controlled to be 30mL/min); the volume of the system was increased by 1.5%, and the measured concentration of hydroxyl free radicals was 0.21 µmol/L; after the temperature of the system was increased by 0.8 °C, the introducing of the nanobubbles was stopped, but the reaction was continued for additional 4 hours; after the polymerization was completed, the resulting jelly solid was granulated, dried at 50 °C until the solid content reached 89%; pulverizing and sieving were conducted to obtain a 20 to 80-mesh polymer.

The viscosity average molecular weight of the polymer was determined to be 1010 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 4

60g of acrylamide and 5g of methacryloyloxyethyl trimethyl ammonium chloride were dissolved in 235g of deionized water, and the pH was adjusted to 6; the initial temperature was controlled to be 20 °C, and nitrogen with the diameter of 1 mm-10 mm was passed into the system for 20min to remove oxygen; then nitrogen nanobubbles with average diameter of 200 nm were introduced into the system (inlet pressure being controlled to be 0.3MPa, and the gas input rate being controlled to be 20mL/min); the volume of the system was increased by 2.6%, and the measured concentration of hydroxyl free radicals was 0.18 µmol/L; after the temperature of the system was increased by 0.5 °C to initiate the polymerization, the introducing of the micro-nanobubbles was stopped, but the reaction was continued for additional 3 hours; after the polymerization was completed, the resulting jelly solid was granulated, dried at 50 °C until the solid content reached 89%; pulverizing and sieving were conducted to obtain a 20 to 80-mesh polymer.

The viscosity average molecular weight of the polymer was determined to be 510 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 5

82g of acrylamide, 8g of N-vinyl pyrrolidone and 4g of maleic anhydride were dissolved in 200g of deionized water, and the pH was adjusted to 6.0; the initial temperature was controlled to be 25 °C, and nitrogen with the diameter of 1 mm-10 mm was passed into the system for 20min to remove oxygen; then carbon dioxide micro-nano bubbles with average diameter of 100 nm were introduced into the system (inlet pressure being controlled to be 0.5MPa, and the gas input rate being controlled to be 15mL/min); the volume of the system was increased by 1.7%, and the measured concentration of hydroxyl free radicals was 0.19 µmol/L; after the temperature of the system was increased by 0.8 °C to initiate the polymerization, the introducing of the micro-nanobubbles was stopped, but the reaction was continued for additional 3 hours; after the polymerization was completed, the jelly solid was removed; after granulating, 9.24g of sodium hydroxide was added and was uniformly mixed, and hydrolysis reaction was conducted at 80 °C for 3 hours; drying was conducted at 50 °C until the solid content reached 89%; pulverizing and sieving were conducted to obtain a 20 to 80-mesh polymer.

The viscosity average molecular weight of the polymer was determined to be 1200 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 6

50g of acrylamide and 5g of sodium acrylate were dissolved in 245g of deionized water, and the pH was adjusted to 6; the initial temperature was controlled to be 10 °C, and nitrogen with the diameter of 1 mm-10 mm was passed into the system for 20min to remove oxygen; then argon nanobubbles with average diameter of 80 nm were introduced into the system (inlet pressure being controlled to be 0.7MPa, and the gas input rate being controlled to be 20mL/min); the volume of the system was increased by 1.4%, and the measured concentration of hydroxyl free radicals was 0.26 µmol/L; after the temperature of the system was increased by 1 °C, the introducing of the nanobubbles was stopped, but the reaction was continued for additional 2 hours; after the polymerization was completed, the resulting jelly solid was granulated, dried at 50 °C until the solid content reached 89%; pulverizing and sieving were conducted to obtain a 20 to 80-mesh polymer.

The viscosity average molecular weight of the polymer was determined to be 2180 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 7

(1) 45g of acrylamide and 15g of sodium 2-acrylamido-2-methylpropanesulfonate were dissolved in 70g of deionized water, and nitrogen with the diameter of 1 mm-10 mm was passed into the system for 20min to remove oxygen, so that an oxygen-removed monomer solution with monomer concentration of 46.2% was obtained.
(2) adding 1L of deionized water into a beaker, and nitrogen with the diameter of 1 mm-10 mm was passed into the system for 20min to remove oxygen; then nitrogen nanobubbles with average diameter of 80 nm were introduced into the system (inlet pressure being controlled to be 0.7MPa, and the gas input rate being controlled to be 20mL/min); an oxygen-removed water containing micro-nanobubbles was obtained after circulating for 20min; the volume of the system was increased by 1.36%, and the measured concentration of hydroxyl free radicals was 0.24 µmol/L.
(3) 170g of (2) oxygen-removed water containing micro-nanobubbles was removed and mixed with (1) high-concentration oxygen-removed monomer solution; the mixture was uniformly stirred and the pH was adjusted to 6.0; the mixture was placed into a polymerization reactor; the initial temperature was controlled to be 8 °C, and the polymerization reaction was conducted for additional 5 hours; after the polymerization was completed, the resulting jelly solid was granulated, and was dried at 50 °C until the solid content reached 89%; pulverizing and sieving were conducted to obtain a 20 to 80-mesh polymer.

The viscosity average molecular weight of the polymer was determined to be 1950 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 8

(1) 40g of acrylamide, 1.5g N-vinyl pyrrolidone and 9g of sodium 2-acrylamide-2-methylpropanesulfonate were dissolved in 85g of deionized water, and nitrogen with the diameter of 1 mm-10 mm was passed into the system for 20min to remove oxygen.
(2) Adding 1L of deionized water into a beaker, and nitrogen with the diameter of 1 mm-10 mm was passed into the system for 20min to remove oxygen; then nitrogen nanobubbles with average diameter of 150 nm were introduced into the system (inlet pressure being controlled to be 0.5MPa, and the gas input rate being controlled to be 30mL/min); oxygen-removed water containing micro-nanobubbles was obtained after circulating for 15min; the volume of the system was increased by 1.6%, and the measured concentration of hydroxyl free radicals was 0.22 µmol/L.
(3) 164.5g of (2) oxygen-removed water containing the micro-nanobubbles was removed and mixed with (1) oxygen-removed monomer solution; the mixture was uniformly stirred and then was placed into a polymerization reactor; the pH was adjusted to 6.0; the initial temperature was controlled to be 5 °C, and the polymerization reaction was conducted for 5 hours; after the polymerization was completed, the resulting jelly solid was granulated, and was dried at 50 °C until the solid content reached 89%; pulverizing and sieving were conducted to obtain a 20 to 80-mesh polymer.

The viscosity average molecular weight of the polymer was determined to be 1790 × 10⁴.

The dissolution time, filtration factor, residual monomer content, aging viscosity retention at 105 °C for 30 days, pore volume, and average pore diameter of the polymer dry powder sample were determined to obtain the data in table 1.

### Example 9

A rock core with a permeability of 600×10⁻³µm² was selected and was vacuumized for at least 2 hours so as to be saturated by simulated brine (mineralization degree 10000mg/L, content of calcium and magnesium ions 500mg/L); the rock core was saturated at 105 °C by using a crude oil with viscosity of 30mPa·s; water-driving was conducted by using simulated brine at displacement speed of 0.005mL/min until the water content at the outlet of the rock core model was at least 98%, obtaining a water-driving recovery rate of 31.2%. The waste liquid and dead volume were evacuated, and 2PV of 2000mg/L aqueous solution of the polymer of Example 7 was injected; displacement was performed at a speed of 0.005mL/min; then the waste liquid and dead volume were evacuated, and water-driving was conducted at 0.005mL/min until the water content reached at least 98%; the recovery rate after polymer injection was 50.5%, and the oil displacement efficiency was increased by 19.3%.

### Comparative example 1

40g of acrylamide, 5g of sodium acrylate and 5g of sodium 2-acrylamido-2-methylpropanesulfonate were dissolved in 250g of deionized water and the pH was adjusted to 4.0; the initial temperature was controlled to be 5 °C, and nitrogen with the diameter of 1 mm-10 mm was passed into the system for 20min to remove oxygen; then 2.5g of ammonium persulfate aqueous solution with mass concentration of 0.2% and 3.0g of 0.3% sodium bisulfite aqueous solution were added; the bubbling of nitrogen was stopped after the temperature of the system was increased by 0.5 °C but the reaction was continued for additional 6 hours; after the polymerization was completed, the resulting jelly solid was granulated, and dried at 50 °C until the solid content reached 89%; pulverizing and sieving were conducted to obtain a 20 to 80-mesh polymer.

The viscosity average molecular weight of the polymer was determined to be 2050 × 10⁴.

The dissolution time, filtration factor, residual monomer content, aging viscosity retention at 105 °C for 30 days, pore volume, and average pore diameter of the polymer dry powder sample were determined to obtain the data in table 1.

### Comparative example 2

50g of acrylamide, 5g of methacrylamide and 3g of sodium crotonate were dissolved in 242g of deionized water and the pH was adjusted to 6; the initial temperature was controlled to be 10 °C, and nitrogen with the diameter of 1 mm-10 mm was passed into the system for 20min to remove oxygen; then 1.0g of 2,2'-azobis(2-methylpropionamidine)dihydrochloride aqueous solution with mass concentration of 0.25%, 1.3g of sodium persulfate aqueous solution with mass concentration of 0.2% and 3.0g of potassium bisulfite aqueous solution with mass concentration of 0.3% were added; the bubbling of nitrogen was stopped after the temperature of the system was increased by 0.5 °C but the reaction was continued for additional 4 hours; after the polymerization was completed, the resulting jelly solid was granulated, and dried at 60 °C until the solid content reached 89%; pulverizing and sieving were conducted to obtain a 20 to 80-mesh polymer.

The viscosity average molecular weight of the polymer was determined to be 1480 × 10⁴.

The dissolution time, filtration factor, residual monomer content, aging viscosity retention at 105 °C for 30 days, pore volume, and average pore diameter of the polymer dry powder sample were determined to obtain the data in table 1.

**TABLE 1 Property test results for Examples 1-8 and Comparative examples 1-2**

| Example No. | residual monomer content (%) | dissolution time (min) | aging viscosity retention (%) | drying time (h) | filtration factor | pore volume (cm³/g) | average pore diameter (µm) |
|---|---|---|---|---|---|---|---|
| Example 1 | 0.02 | 19 | 96.9 | 10 | 1.029 | 0.198 | 0.29+/- 0.082 |
| Example 2 | 0.01 | 23 | 96.5 | 9.5 | 1.066 | 0.315 | 0.315+/- 0.098 |
| Example 3 | 0.02 | 26 | 95.8 | 11.5 | 1.075 | 0.363 | 0.365+/- 0.093 |
| Example 4 | 0.01 | 27 | 95.2 | 12 | 1.112 | 0.379 | 0.382+/- 0.110 |
| Example 5 | 0.01 | 28 | 95.3 | 11 | 1.058 | 0.341 | 0.337+/- 0.079 |
| Example 6 | 0.01 | 21 | 95.1 | 9.5 | 1.049 | 0.310 | 0.34+/- 0.084 |
| Example 7 | 0.03 | 20 | 97.0 | 9.5 | 1.026 | 0.304 | 0.328+/- 0.077 |
| Example 8 | 0.02 | 25 | 96.7 | 11.5 | 1.065 | 0.368 | 0.376+/- 0.105 |
| Comparative example 1 | 0.01 | 105 | 78.4 | 48 | 1.492 | 0.072 | 0 |
| Comparative example 2 | 0.02 | 115 | 65.6 | 48 | 1.485 | 0.069 | 0 |

It can be seen from Examples 1 to 8 that the free radical polymerization in the system can all be initiated by introducing micro-nano bubbles with gas bubble diameter of 50 nm to 200 nm into the polymerization system. The viscosity average molecular weights of the prepared polymers can be 520 × 10⁴ to 2320 × 10⁴, and the contents of the residual monomer(s) can be controlled to be comparable to the residual monomer contents obtained by polymerization initiated by an initiator. This demonstrates that a large amount of hydroxyl free radicals is generated after cavitation of the micro-nano bubbles in the system, and the hydroxyl free radicals can initiate the free radical solution polymerization of vinyl monomer(s) to obtain a polymer. Meanwhile, the aging viscosity retentions at 105 °C of the polymers obtained in Examples 1-8 are significantly higher than those of the Comparative examples. It demonstrates that the initiation using the micro-nano bubbles can avoid the free radical degradation induced by the initiator(s) residue since traditional initiator(s) are not introduced.

Comparing Example 1 with Comparative example 1 and comparing Example 2 with Comparative example 2, it can be seen Examples 1 to 2 can all produce polymers with molecular weights similar to Comparative examples 1 to 2, demonstrating that micro-nano bubble initiation can replace traditional initiators and achieve polymerization effects similar to traditional initiators. In addition, the polymers obtained in Examples 1-2 comprise a porous structure due to the introduction of the micro-nano bubbles, and thus the drying times and dissolution times are significantly lower than those in Comparative examples 1-2, and the pore volumes are significantly higher than those in Comparative examples 1-2.

The data of Examples 1 to 8 illustrate that good polymerization effects can be achieved by introducing micro-nano bubbles into the system, and traditional initiators can be replaced for initiation of polymerization. The problems of the source, cost, toxicity and stability of traditional initiators and the influence of traditional initiators on the properties of the polymers and the like can be avoided; and the energy consumption problem of conventional initiation modes of light, heat, radiation and the like. It is a free radical solution polymerization initiation method which is simple in operation and low in energy consumption and which has the characteristics of easy and convenient to control and widely applicable.

The preferred embodiments of the present invention have been described in detail above, but the present invention is not limited thereto. Many simple modifications can be made to the technical solutions of the present invention within the scopes of the technical concepts of the present invention, including the combinations of various technical features in any other suitable manners. These simple modifications and combinations should also be deemed as the disclosures of the present invention, and all of them are covered by the protection scopes of the present invention.

The endpoints of ranges and any values disclosed herein are not limited to the precise ranges or values, rather these ranges or values are to be understood to include values close to said ranges or values. For numerical ranges, the endpoint values of various ranges, the endpoint values of various ranges and individual point values, and the individual point values can be combined with each other to obtain one or more new numerical ranges, and these new numerical ranges shall be deemed to be concretely disclosed herein.

Reference in this specification to "an embodiment" or "some embodiments" means that a feature, structure or characteristic described in connection with said embodiment(s) is included in at least one embodiment. These features, structures or characteristics can be combined in any suitable manner in one or more embodiments.

## Claims

1. A free radical solution polymerization process, **characterized in that** said process includes:
introducing micro-nano bubbles of gas B into an aqueous solution of vinyl monomer(s), and initiating the free radical solution polymerization of the vinyl monomer(s) by the free radicals generated after the cavitation of the micro-nano bubbles to prepare a polymer.

2. The free radical solution polymerization process according to claim 1, **characterized in that** an inert gas A is passed into the aqueous solution of the vinyl monomer(s) to remove oxygen before introducing the micro-nano bubbles of gas B.

3. The free radical solution polymerization process according to claim 2, **characterized in that** the inert gas A is at least one selected from the group consisting of nitrogen, argon, helium, neon, krypton, xenon, and combinations thereof; and/or the diameter of the bubbles of inert gas A is 1 mm-10 mm and the passing time is 5 min-60 min, preferably 20min-40 min.

4. The free radical solution polymerization process according to any of claims 1 to 3, **characterized in that** the polymer is obtained in the form of bubble-containing jelly.

5. The free radical solution polymerization process according to claim 4, **characterized in that** the process further includes treating the polymer in the form of bubble-containing jelly to obtain a polymer having a micro-nano porous structure; preferably, the treatment of the polymer in the form of bubble-containing jelly comprises granulating the resulting bubble-containing jelly, optionally hydrolyzing, drying, pulverizing and optionally sieving.

6. The free radical solution polymerization process according to any of claims 1 to 5, **characterized in that**:
the concentration by weight of the aqueous solution of vinyl monomer(s) is 10%-55%; preferably 15% -35%; and/or
the gas B is at least one selected from the group consisting of nitrogen, argon, helium, neon, krypton, xenon, carbon dioxide and combinations thereof; and/or
the vinyl monomer(s) is at least one selected from the group consisting of an anionic monomer and alkali metal salts, alkaline earth metal salts and ammonium salts thereof, a nonionic monomer, a cationic monomer, and combinations thereof; the vinyl monomer(s) is preferably an electron-deficient olefin, and more preferably an electron-deficient olefin comprising at least one group selected from the group consisting of amide group, carboxyl group, ester group, phenyl group, sulfonic acid group, and combinations thereof.

7. The free radical solution polymerization process according to claim 5, **characterized in that**:
the anionic monomer comprises at least one selected from the group consisting of acrylic acid, methacrylic acid, maleic acid, fumaric acid, itaconic acid, maleic anhydride, cinnamic acid, (E)-butenedioic acid, crotonic acid, 2-methacrylamidoethanesulfonic acid, 2-acrylamidoethanesulfonic acid, 2-acrylamido-2-methylpropanesulfonic acid, 2-methacrylamido-2-methylpropanesulfonic acid, 2-acrylamidopropanesulfonic acid, 2-methacrylamido-propanesulfonic acid, vinylsulfonic acid, propenylsulfonic acid, styrenesulfonic acid, and combinations thereof; and/or
the alkali metal salt is lithium, potassium or sodium salt, and the alkaline earth metal salt is magnesium, calcium, strontium or barium salt; and/or
the nonionic monomer comprises a hydrophilic group; preferably, the nonionic monomer comprises at least one selected from the group consisting of acrylamide, methacrylamide, N-vinylpyrrolidone, N-ethylacrylamide, N-ethylmethacrylamide, N-methylacrylamide, N-methylmethacrylamide, N,N-dimethylacrylamide, N,N-diethylacrylamide and N,N-diisopropylacrylamide, N,N-dimethylmethacrylamide, N,N-diethylmethacrylamide and N,N-diisopropylmethacrylamide, 2-hydroxyethyl methacrylate, 2-hydroxyethyl acrylate, 2-hydroxypropyl methacrylate, 2-hydroxypropyl acrylate, methoxypolyethylene glycol methacrylate, methoxypolyethylene glycol acrylate, polyethylene glycol acrylate, polyethylene glycol methacrylate, N-vinylacetamide, N-[(4-aminosulfonyl)phenyl]acrylamide, and combinations thereof; and/or
the cationic monomer comprises at least one selected from the group consisting of dimethylaminoethyl acrylate and quaternary ammonium salts thereof, dimethylaminoethyl methacrylate and quaternary ammonium salts thereof, dimethylaminopropyl acrylate and quaternary ammonium salts thereof, dimethylaminopropyl methacrylate and quaternary ammonium salts thereof, dimethylaminopropyl acrylamide and quaternary ammonium salts thereof, dimethylaminopropyl methacrylamide and quaternary ammonium salts thereof, and combinations thereof.

8. The free radical solution polymerization process according to claim 6 or 7, **characterized in that**:
the vinyl monomer(s) further comprises a hydrophobic monomer; wherein the total weight of the hydrophobic monomer is not more than 10% of the total weight of the vinyl monomer(s);
preferably, the hydrophobic monomer comprises at least one selected from the group consisting of N-hexyl acrylamide, N-octyl acrylamide, N-nonyl acrylamide, N-dodecyl acrylamide, N-tetradecyl acrylamide, N-hexadecyl acrylamide, N-octadecyl acrylamide, N,N-dibutyl acrylamide, N,N-dihexyl acrylamide, N,N-dioctyl acrylamide, N,N-didecyl acrylamide, N,N-di(dodecyl) acrylamide, methyl acrylate, methyl methacrylate, ethyl acrylate, ethyl methacrylate, butyl acrylate, butyl methacrylate, propyl acrylate, propyl methacrylate, vinyl acetate, vinyl propionate, and combinations thereof.

9. The free radical solution polymerization process according to any of claims 1 to 8, **characterized in that**:
the average diameter of the micro-nano bubbles of the gas B is 20 nm to 1 µm; preferably 20 nm to 900 nm; more preferably 30 nm to 500 nm; more preferably 40 nm to 400 nm; still more preferably 50 nm to 200 nm.

10. The free radical solution polymerization process according to any of claims 1 to 9, **characterized in that**:
the pH of the aqueous solution of vinyl monomer(s) is 4-9; preferably 4-6; and/or
the initial polymerization temperature is -10 °C to 40 °C; preferably 0 to 25 °C; and/or
the introducing of the micro-nano bubbles is stopped after the temperature of the system is increased by 0.5 °C-1 °C, and the reaction is continued for additional 1-6 hours; preferably 2-5 hours.

11. The free radical solution polymerization process according to any of claims 1 to 10, **characterized in that** the introducing of the micro-nano bubbles of the gas B comprises introducing the micro-nano bubbles of the gas B directly into the aqueous solution of the vinyl monomer(s); or
**characterized in that** the introducing of the micro-nano bubbles of the gas B comprises: introducing the micro-nano bubbles of the gas B into oxygen-removed water to obtain oxygen-removed water containing the micro-nano bubbles, and mixing the oxygen-removed water containing the micro-nano bubbles with oxygen-removed aqueous solution of vinyl monomer(s).

12. The free radical solution polymerization process according to any of claims 1 to 11, **characterized in that** the free radicals for initiating the free radical solution polymerization of the vinyl monomer(s) are generated only by the cavitation of the micro-nano bubbles, and/or wherein the content of initiator in the polymer is zero.

13. The free radical solution polymerization process according to claim 5, **characterized in that** the polymer having micro-nano porous structure has pores with diameter of 0.05 µm to 2 µm, more preferably 0.1 µm to 1 µm, still more preferably 0.1 µm to 0.5 µm, and a pore volume of 0.080 to 1 cm³/g, preferably 0.090 to 0.80 cm³/g, still more preferably 0.090 to 0.50 cm³/g.

14. The free radical solution polymerization process according to any of claims 1-13, **characterized in that** the polymer has at least one, preferably all, of the following properties: water solubility with a dissolution time of less than 30 minutes; viscosity average molecular weight of 300 × 10⁴-3000 × 10⁴; content by weight of residual monomer(s) of less than 0.1%; and aging viscosity retention of greater than 90% (105 °C).

15. A polymer prepared by the free radical solution polymerization process according to any of claims 1 to 14.

16. An acrylamide-based polymer with a micro-nano porous structure, wherein the polymer has pores with a diameter of 0.05 µm to 2 µm, more preferably 0.1 µm to 1 µm, still more preferably 0.1 µm to 0.5 µm, and a pore volume of 0.080 to 1 cm³/g, preferably 0.090 to 0.80 cm³/g, still more preferably 0.090 to 0.50 cm³/g, and the content of initiator in the polymer is zero.

17. The acrylamide-based polymer with micro-nano porous structure according to claim 16, wherein the polymer has at least one, preferably all, of the following properties: water solubility with dissolution time less than 30 minutes; viscosity average molecular weight of 300 × 10⁴-3000 × 10⁴; content by weight of residual monomer(s) of less than 0.1%; and aging viscosity retention of greater than 90% (105 °C).

18. The polymer according to claim 16 or 17, **characterized in that** the polymer comprises acrylamide monomer and optionally one or more further vinyl monomers, preferably the vinyl monomers are selected from the group consisting of an anionic monomer and alkali metal salts, alkaline earth metal salts and ammonium salts thereof, a nonionic monomer, a cationic monomer, and combinations thereof; the vinyl monomer(s) is preferably an electron-deficient olefin, and more preferably an electron-deficient olefin comprising at least one group selected from the group consisting of amide group, carboxyl group, ester group, phenyl group, sulfonic acid group, and combinations thereof.

19. The polymer according to claim 18, **characterized in that**:
the anionic monomer comprises at least one selected from the group consisting of acrylic acid, methacrylic acid, maleic acid, fumaric acid, itaconic acid, maleic anhydride, cinnamic acid, (E)-butenedioic acid, crotonic acid, 2-methacrylamidoethanesulfonic acid, 2-acrylamidoethanesulfonic acid, 2-acrylamido-2-methylpropanesulfonic acid, 2-methacrylamido-2-methylpropanesulfonic acid, 2-acrylamidopropanesulfonic acid, 2-methacrylamido-propanesulfonic acid, vinylsulfonic acid, propenylsulfonic acid, styrenesulfonic acid, and combinations thereof; and/or
the alkali metal salt is lithium, potassium or sodium salt, and the alkaline earth metal salt is magnesium, calcium, strontium or barium salt; and/or
the nonionic monomer comprises a hydrophilic group; preferably, the nonionic monomer comprises at least one selected from the group consisting of acrylamide, methacrylamide, N-vinylpyrrolidone, N-ethylacrylamide, N-ethylmethacrylamide, N-methylacrylamide, N-methylmethacrylamide, N-dimethylacrylamide, N-diethylacrylamide and N,N-diisopropylacrylamide, N,N-dimethylmethacrylamide, N,N-diethylmethacrylamide and N,N-diisopropylmethacrylamide, 2-hydroxyethyl methacrylate, 2-hydroxyethyl acrylate, 2-hydroxypropyl methacrylate, 2-hydroxypropyl acrylate, methoxypolyethylene glycol methacrylate, methoxypolyethylene glycol acrylate, polyethylene glycol acrylate, polyethylene glycol methacrylate, N-vinylacetamide, N-[(4-aminosulfonyl)phenyl]acrylamide, and combinations thereof; and/or
the cationic monomer comprises at least one selected from the group consisting of dimethylaminoethyl acrylate and quaternary ammonium salts thereof, dimethylaminoethyl methacrylate and quaternary ammonium salts thereof, dimethylaminopropyl acrylate and quaternary ammonium salts thereof, dimethylaminopropyl methacrylate and quaternary ammonium salts thereof, dimethylaminopropyl acrylamide and quaternary ammonium salts thereof, dimethylaminopropyl methacrylamide and quaternary ammonium salts thereof, and combinations thereof;
optionally, the vinyl monomer(s) further comprises a hydrophobic monomer; wherein the total weight of the hydrophobic monomer is not more than 10% of the total weight of the vinyl monomer(s);
the hydrophobic monomer comprises at least one selected from the group consisting of N-hexyl acrylamide, N-octyl acrylamide, N-nonyl acrylamide, N-dodecyl acrylamide, N-tetradecyl acrylamide, N-hexadecyl acrylamide, N-octadecyl acrylamide, N,N-dibutyl acrylamide, N,N-dihexyl acrylamide, N,N-dioctyl acrylamide, N,N-didecyl acrylamide, N,N-di(dodecyl) acrylamide, methyl acrylate, methyl methacrylate, ethyl acrylate, ethyl methacrylate, propyl acrylate, propyl methacrylate, butyl acrylate, butyl methacrylate, vinyl acetate, vinyl propionate, and combinations thereof.

20. Use of the polymer according to claim 15 or the polymer according to any of claims 16-19 in the recovery of an oil reservoir, preferably in high temperature high salt oil reservoir polymer flooding, offshore oil reservoir polymer flooding, heavy oil reservoir polymer flooding, and fracturing.
